# EUROPÄISCHE PATENTSCHRIFT

(11) **EP 1 208 936 B1**
(45) Veröffentlichungstag und Bekanntmachung des Hinweises auf die Patenterteilung: **15.12.2004**
(21) Anmeldenummer: 01126736.6
(22) Anmeldetag: 09.11.2001
(51) Int. Cl.: B23P 19/04

(54) **Verfahren zur druckdichten Befestigung eines Schlauchstückes an einem Anschlussteil**
Method for pressure tight fitting of a flexible hose onto a connecting element
Procédé pour le fixation étanche à pression d'une pièce de tuyaux sur un élément de connection

(30) Priorität: 15.11.2000 DE 10056571
(43) Veröffentlichungstag der Anmeldung: 29.05.2002
(73) Patentinhaber: Continental Aktiengesellschaft, 30165 Hannover (DE)
(72) Erfinder: Wode, Stefan, Dr., 30851 Langenhagen (DE)

(56) Entgegenhaltungen:
- EP-A- 0 548 627
- WO-A-01/09541
- DE-U- 29 806 179

## Beschreibung

Die Erfindung betrifft ein Verfahren zum druckdichten Befestigen eines Schlauchstückes an einem Anschlussteil, gemäß dem Oberbegriff des Anspruchs 1, wie es z. B. aus der EP 0 548 627 B1 vorbekannt ist.

Die EP0548627B1 beschreibt ein Verfahren und eine Vorrichtung zur druckdichten Befestigung eines Schlauchstückes aus elastomerem Werkstoff, insbesondere von Schlauchrollbälgen für Luftfedern, an einem Anschlussteil schiebt man ein offenes Ende des Schlauchstückes auf das Anschlussteil auf. Ein metallischer Spannring wird, das Schlauchstück umfassend, in dessen aufgeschobenen Endbereich positioniert. Der Durchmesser des Spannringes wird durch radiales Zusammenpressen verkleinert und dadurch das Schlauchstück auf dem Anschlussteil dicht festgespannt. Um die Einspannung des Endabschnittes eines Schlauchstückes hinsichtlich ihrer Qualität zu erhöhen, wird während des radialen Zusammenpressens des Spannringes die beim radialen Einspannvorgang des Schlauchstückes am Anschlussteil auftretende Axialkraft erfasst.

Die zu befestigenden Schlauchstücke, mit denen sich die vorliegende Erfindung befasst, werden insbesondere in Form von Rollbälgen für Kraftfahrzeugluftfedern verwendet.
Die druckdichte Befestigung solcher Rollbälge an Abdeckplatten und/oder Abrollkolben erfolgt mit radial verpressbaren metallischen Spannringen.

Vorrichtungen zur druckdichten Befestigung eines Rollbalgs an ein Anschlussteil sind aus den europäischen Patentschriften EP-B-0 110 805 und EP 0 548 627 B1 vorbekannt. Dabei ist eine aus ringförmig angeordneten und radial verschiebbaren Segmenten bestehende Baueinheit um die aufnehmende Längsachse der Spannvorrichtung angeordnet.

Zur Befestigung eines Rollbalgs auf einem Anschlussteil wird der Rollbalg auf das Anschlussteil aufgesteckt, mit einem Spannring versehen und axial in die mittige Aufnahme der Spannvorrichtung eingeführt. Eine von außen auf die radial verschiebbaren Segmente wirkende Kraft führt zu einer Verkleinerung der die Rollbalg-Anordnung aufnehmende zentrale Ausnehmung zwischen den Klemmbacken und bei zunehmend einengender Berührung mit der Rollbalg-Anordnung zu einer plastischen Verformung des Spannrings, womit das vorher aufgesteckte Ende des Rollbalgs auf dem Anschlussteil fest eingespannt wird.

Die Beendigung des Spannvorganges kann auf verschiedene Weise gesteuert werden:
1. Durch eine reine Wegbegrenzung. Aufgrund von Fertigungstoleranzen an Spannring und/oder Balgwand kann bei einer reinen Wegbegrenzung keine reproduzierbare und damit keine zufriedenstellende Befestigungsqualität erzielt werden, denn unterschiedliche Maße führen bei reiner Wegbegrenzung zu einem unterschiedlich starken Andruck Spannring/Schlauchbalgende. Dieses kann einerseits zu einer Beschädigung des mechanisch empfindlichen Balgs bei zu starkem Andruck und andererseits zu einer nicht ausreichend reibschlüssigen Verspannung des Schlauchrollbalges bei zu geringem Andruck führen.
2. Durch eine Begrenzung der axialen Anpresskraft. Hierbei wird der Spannvorgang bei Erreichen einer vorgegebenen Anpresskraft abgebrochen. Geometrische Fertigungstoleranzen können auf diese Weise ausgeglichen werden. Der Nachteil eines derartigen kraftgesteuerten Spannvorganges besteht darin, dass es in der Spannvorrichtung zu Krafttoleranzen kommen kann und dass die vom Presswerkzeug erzeugte Kraft deshalb nicht in einem eindeutigen Zusammenhang zu derjenigen Kraft steht, die zwischen dem Schlauchrollbalg und dem Anschlussteil entsteht.

Wesentlicher noch ist die Tatsache, dass Schwankungen der Spannringhärte dierekten Einfluss auf das Klemmergebnis haben.

Die mit Anspruch 1 im wesentlichen gelöste Aufgabe der Erfindung besteht darin, das Verklemmen eines Schlauchendes an einem Anschlussteil mittels eines (plastisch verformbaren) Spannringes im "richtigen" Moment zu beenden, d. h. bevor Schäden auftreten, aber erst dann, wenn eine ausreichende Festigkeit gewährleistet ist.

Zur druckdichten Befestigung eines Schlauchstückes aus elastomerem Material wird zunächst das vorgesehene Schlauchende in herkömmlicher Weise auf das Anschlussteil geschoben. Dann wird ein metallischer Spannring auf den Endbereich der Kombination Schlauchende/Anschlussteil positioniert. Anschließend wird mit Hilfe einer Spannvorrichtung (z. B. herkömmlicher Bauart) durch radiales Zusammenpressen der Klemmbacken die zentrale Ausnehmung und damit der eingelegte, plastisch verformbare Spannring so weit verkleinert, dass das Ende des Schlauchstücks auf dem Anschlussteil druckdicht und mechanisch fest verspannt wird, wobei gleichzeitig die während des Einspannvorganges auftretende Radial- oder eine mit ihr in direktem Zusammenhang stehende Kraft gemessen wird.

Erfindungswesentlich ist nun, dass während des Vorganges des Verklemmens die Kraft/Weg-Kurve verfolgt wird und dass ein charakteristisches Merkmal der gemessenen Kraft/Weg-Kurve als Berechnungsgrundlage für ein Abschaltkriterium benutzt wird. Als Abschaltkriterien können Maxima und Wendepunkte der Kraft/Weg-Kurve angesehen werden. Dabei wird eine definierte plastische Verformung des zu verklemmenden Anschlussteils (Luftfeder-Deckel und/oder -Kolben) bewusst in Kauf genommen.

Vorzugsweise wird der Klemmvorgang erst dann beendet, wenn die Klemmkraft erstmals abzusinken beginnt, nachdem ein definiertes Maximum überschritten wurde. Es hat sich nämlich gezeigt, dass auf diese Weise eine äußerst feste Verspannung erzielt wird ohne eine Beschädigung des Schlauchendes befürchten zu müssen.
Da die am Spannring zur Wirkung gelangende Kraft wegen der in der Vorrichtungsmechanik verschwindende Verlustkraft von der primär aufgebrachten Kraft abweichen kann, ist es erfindungswesentlich, sich nach dem Klemmen zu vergewissern (d. h. zu prüfen), ob die erzielten Parameter (Kraft/Weg) innerhalb definierter Toleranzbänder liegen.

Wird ein plastisch verformbares Kolben/Deckel-Material, dessen Bruchdehnung bei dem Verfahren nicht überschritten wird, verwendet, so wird eine optimale Verspannung sichergestellt.

Mit Hilfe des erfindungsgemäßen Verfahrens wird die Klemmung preisgünstiger, denn es lassen sich preiswerte Rechner in der Fertigung einsetzen.
Aber nicht nur bezüglich der Fertigungsvorrichtung besteht ein Einsparpotential sondern auch bei den Anbauteilen.
Die Klemmung kann maximal ausgereizt werden. Dadurch sind z. B. dünnwandigere Materialien für die Herstellung von Luftfedern verwendbar. Außerdem lassen sich Teile mit großen Toleranzen (Härte, Dicke) dennoch sicher verklemmen. Eine materialspezifische Optimierung der Klemmverbindung ist auch ohne Kenntnis der individuellen Materialeigenschaften möglich.
Außerdem wird die Klemmung sicherer. Es wird weniger Ausschuss produziert.

Das erfindungsgemäße Verfahren zur druckdichten Befestigung eines Schlauchstückes ist nicht nur bei Luftfedern zur Befestigung eines Rollbalgs an einen Deckel und/oder an einen Abrollkolben anwendbar. Auch auf dem Hydrauliksektor sind Schlauchenden druckdicht an diverse Anschlussteile anzubringen.

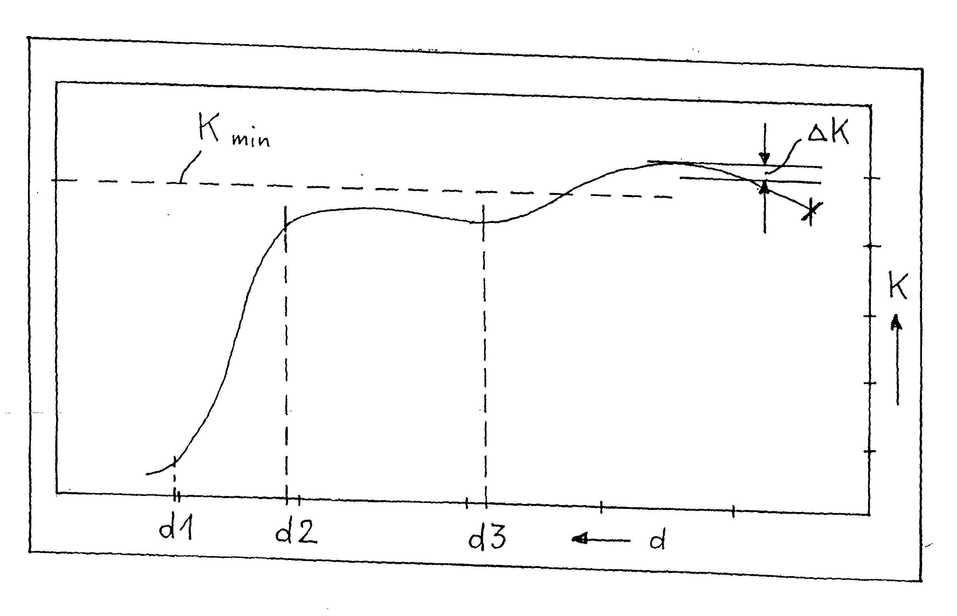

Der technische Hintergrund bezüglich des erfindungsgemäßen Verfahrens wird anhand des beigefügten Diagramms erläutert. Die Abbildung zeigt ein Kraft/Weg-Diagramm während des Spannvorgangs eines Luftfeder-Spannringes.

Das dargestellte Diagramm zeigt die Zuspannkraft K der Klemmvorrichtung gegenüber dem Durchmesser d zwischen den Einspannbacken der Klemmvorrichtung. Diese Kraft/Weg-Kennlinie wird mit Hilfe eines Kraft- und eines Weg-Sensors aufgenommen. Die Klemmbacken durchfahren zunächst einen Luftspalt, wobei lediglich die mehr oder weniger konstante Gleitreibung zu überwinden ist (nicht dargestellt). Wenn die Pressbacken mit dem Spannring in Berührung gelangen (d1), steigt die Kraft/Weg-Kurve entsprechend der Härte des Spannringes an (d1 bis d2), wobei der Spannring elastisch verformt wird. Beim weiteren Zusammendrücken (d2 bis d3) findet eine plastische Verformung des Spannringes statt. Die in diesem Stadium des Pressvorganges aufzubringende Kraft ist gegeben mit der Summe aus der inneren Reibung des Presswerkzeugs (abhängig von der Position des Kraftsensors) und der für die plastische Verformung des Spannringes benötigten Kraft, die weitgehend konstant sind.
Das weitere Zusammenfahren der Pressbacken führt zu einer weiteren plastischen Verformung des Spannringes und zu einer Kraft zwischen dem Schlauch-Rollbalg und dem Anschlussteil (Deckel bzw. Abrollkolben). Dabei findet auch eine Verformung des Anschlussteiles statt, was durch ein Ansteigen der Kraft-Weg-Kurve sichtbar wird (ab d3). In diesem Bereich ist die Steigung der Kraft/Weg-Kurve weitgehend von der Steifigkeit des Anschlussteiles abhängig.

Erfindungsgemäß wird nun dieser geradlinig ansteigende Bereich überschritten und erreicht ein Maximum der Kraft, wonach die aufzubringende Kraft wieder leicht abfällt. Das Maximum der Kurve gelangt nur dann zur Auswertung, wenn ein zusätzliches Kriterium (K > Kₘᵢₙ oder d < d3) erfüllt ist. D. h., ein sonstiges lokales Maximum (z. B. bei d1), welches vom verwendeten Maschinentyp bzw. Ort des Kraftsensors abhängig ist, soll nicht gewertet werden. Erfindungsgemäß wird ein ΔK als Abschaltkriterium postuliert. D. h.: fällt die Kraft um ΔK ab, so wird der Spannvorgang beendet. Bei weiterer Fortsetzung des Spannvorganges würde am Punkt X eine Zerstörung des Einspannteils erfolgen.

## Patentansprüche

1. Verfahren zur druckdichten Befestigung eines Schlauchstückes aus elastomerem Material,
insbesondere eines Rollbalgs für eine Luftfeder,
an einem Anschlussteil. z. B. den Deckel und/oder den Kolben einer Luftfeder,
- wobei ein offenes Ende des Schlauchstücks auf das Anschlussteil geschoben wird,
- wobei ein metallischer Spannring das Schlauchstück umfassend in dessen aufgeschobenen Endbereich positioniert wird,
- wobei der Durchmesser des Spannringes durch radiales Zusammenpressen verkleinert und dadurch das Schlauchstück auf dem Anschlussteil dicht festgespannt wird,
**dadurch gekennzeichnet,**
- **dass** die während des Einspannvorganges zwischen Spannring und Schlauchstück auftretende Radialkraft erfasst wird, und
- **dass** die Kraft/Weg-Kurve während des Verklemmens verfolgt wird, und
- **dass** ein charakteristisches Merkmal der gemessenen Kraft/Weg-Kurve als Berechnungsgrundlage für ein Abschaltkriterium benutzt wird,
- **dass** nach dem Klemmvorgang überprüft wird, ob die erzielten Parameter für die Kraft und den Weg innerhalb definierter Toleranzbänder liegen.

2. Verfahren nach Anspruch 1,
**dadurch gekennzeichnet,**
**dass** der Klemmvorgang erst dann beendet wird, wenn die Klemmkraft erstmalig abzusinken beginnt, nachdem ein definiertes Maximum überschritten wurde.

3. Verfahren nach Anspruch 1,
**dadurch gekennzeichnet,**
**dass** das Maximum der Kurve nur dann zur Auswertung verwendet wird, wenn K > Kₘᵢₙ und/oder d < d3 als zusätzliches Kriterium erfüllt ist.

4. Verfahren nach Anspruch 1
**gekennzeichnet durch**
eine Ausnutzung der Wendepunkte der Kraft/Weg-Kurve als Abschaltkriterium.

5. , Verfahren nach einem der Ansprüche 1 bis 4,
**dadurch gekennzeichnet,**
**dass** man ein plastisch verformbares Kolben/Deckelmaterial (Blech, PA 6.6), dessen Bruchdehnung bei dem Verfahren nicht überschritten wird, verwendet.

## Claims

1. Method for the pressure-tight fastening of a piece of hose made of elastomeric material,
in particular a U-type bellows for an air spring, to a connecting part, for example the cover and/or the piston of an air spring,
- an open end of the piece of hose being pushed onto the connecting part,
- a metal clamping ring being positioned around the piece of hose in the pushed-on end region thereof,
- the diameter of the clamping ring being reduced by radially pressing it together and, as a result, the piece of hose being tightly clamped securely on the connecting part,
**characterized**
- **in that** the radial force occurring between the clamping ring and the piece of hose during the clamping-in operation is sensed, and
- **in that** the force/displacement curve is monitored during the clamping, and
- **in that** a characteristic feature of the measured force/displacement curve is used as a basis for calculation for a switching-off criterion,
- **in that** after the clamping operation it is checked whether the parameters achieved for the force and the displacement lie within defined tolerance bands.

2. Method according to Claim 1, **characterized in that** the clamping operation is only ended when the clamping force begins to drop for the first time after a defined maximum has been exceeded.

3. Method according to Claim 1, **characterized in that** the maximum of the curve is only used for the evaluation if K > Kₘᵢₙ and/or d < d3 is satisfied as an additional criterion.

4. Method according to Claim 1, **characterized by** use of the points of inflection of the force/displacement curve as a switching-off criterion.

5. Method according to one of Claims 1 to 4, **characterized in that** a plastically deformable piston/cover material (sheet metal, nylon 6.6), the elongation at break of which is not exceeded during the method, is used.

## Revendications

1. Procédé pour la fixation étanche à la pression d'une pièce de tuyau en matériau élastomère,
notamment d'un soufflet roulant pour un ressort pneumatique,
sur un élément de connexion, par exemple le couvercle et/ou le piston d'un ressort pneumatique, dans lequel
- une extrémité ouverte de la pièce de tuyau est poussée sur l'élément de connexion,
- un collier de serrage métallique est positionné dans cette région d'extrémité poussée en enveloppant la pièce de tuyau,
- le diamètre du collier de serrage est réduit par compression radiale et de ce fait la pièce de tuyau est serrée fermement et hermétiquement contre l'élément de connexion,
**caractérisé en ce que**
- la force radiale produite pendant l'opération de serrage entre le collier de serrage et la pièce de tuyau est déterminée et
- la courbe force/distance pendant le serrage est suivie et
- une caractéristique de la courbe force/distance mesurée est utilisée comme base du calcul d'un critère d'arrêt,
- après l'opération de serrage, on vérifie si les paramètres obtenus pour la force et la distance sont inclus dans des bandes de tolérances définies.

2. Procédé selon la revendication 1,
**caractérisé en ce que**
l'opération de serrage est seulement terminée une fois que la force de serrage a commencé à diminuer pour la première fois après le dépassement d'un maximum défini.

3. Procédé selon la revendication 1,
**caractérisé en ce que**
le maximum de la courbe est seulement utilisé pour l'analyse si, en tant que critère supplémentaire, on a K > Kₘᵢₙ et/ou d < d3.

4. Procédé selon la revendication 1,
**caractérisé par**
une utilisation du point d'inflexion de la courbe force/distance en tant que critère d'arrêt.

5. Procédé selon l'une quelconque des revendications 1 à 4,
**caractérisé en ce que**
l'on utilise un matériau de couvercle/piston déformable plastiquement (tôle, PA 6.6), dont l'allongement à la rupture n'est pas dépassé au cours du procédé.
